# EUROPEAN PATENT SPECIFICATION

(11) **EP 4 432 813 B1**
(45) Date of publication and mention of the grant of the patent: **10.09.2025**
(21) Application number: 22799984.4
(22) Date of filing: 19.10.2022
(51) Int. Cl.: A01C 7/20

(54) **SEED DELIVERY DEVICE COMPRISING A HELICAL CHANNEL AND RELATED ROW UNIT AND METHOD**
SAATGUTABGABEEINRICHTUNG MIT EINEM SPIRALFÖRMIGEN KANAL SOWIE ZUGEHÖRIGE REIHENEINHEIT UND VERFAHREN
DISPOSITIF DE DISTRIBUTION DE GRAINES COMPRENANT UN CANAL HÉLICOÏDAL ET UNITÉ DE RANGÉE ET PROCÉDÉ ASSOCIÉS

(30) Priority: 16.11.2021 US 202163264109 P
(43) Date of publication of application: 25.09.2024
(73) Proprietor: Precision Planting LLC, Tremont, IL 61568 (US)
(72) Inventor: HODEL, Jeremy, TREMONT, Illinois 61568 (US)
(74) Representative: AGCO Intellectual Property Department
(86) International application number: PCT/IB2022/060047
(87) International publication number: WO 2023/089408

(56) References cited:
- WO-A1-2018/203157
- US-A1- 2005 252 431
- US-A1- 2015 223 392

## Description

### FIELD

Embodiments of the present disclosure relate generally to row units used on agricultural vehicles for planting an agricultural crop, and more particularly to seed-delivery systems.

### BACKGROUND

Crop yields are affected by a variety of factors, such as seed placement, soil quality, weather, irrigation, and nutrient applications. Seeds are typically planted in trenches formed by discs or other mechanisms of a planter row unit. Depth of seed placement is important because seeds planted at different depths emerge at different times, resulting in uneven crop growth. Spacing of seeds can affect yield because plants that are too close together compete for nutrients, and plants too far apart leave wasted space between them. Orientation of seeds can affect time to plant emergence, and therefore, uniformity of plant growth. It would be beneficial to have improved methods of controlling the position and orientation of seeds placed in trenches so that seeds emerge and grow more uniformly.

US 2015/223392 A1 and US 2005/252431 A1 disclose known seed delivery devices.

### BRIEF SUMMARY

In accordance with an aspect of the invention, there is provided a seed-delivery device according to claim 1. Optional features of the seed-delivery device are set out in the claims dependent on claim 1.

In another aspect of the invention, there is provided a method of planting with a row unit according to claim 10. Optional features of the method are set out in the claims dependent on claim 10.

Other technical features may be readily apparent to one skilled in the art from the following figures, descriptions, and claims.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified side view of a row unit for planting;
FIG. 2A is a simplified perspective view of a seed-delivery device that may be used in the row unit of FIG. 1, including a seed meter and a seed tube;
FIG. 2B is a simplified perspective view of the seed-delivery device of FIG. 2A with a cover of the seed meter removed;
FIG. 3A is an enlarged view of a cross-section of the seed-delivery device of FIG. 2A and showing an insert in the seed tube;
FIG. 3B is an enlarged view of a cross-section of the seed-delivery device of FIG. 2A and showing the insert in the seed tube;
FIG. 3C is an enlarged view of a cross-section of the seed-delivery device of FIG. 2A with the insert removed;
FIG. 4 is a simplified view of another insert that may be used in the seed tube; and
FIG. 5 is a simplified flow chart illustrating a method of planting using the row unit of FIG. 1.

### DETAILED DESCRIPTION

The illustrations presented herein are not actual views of any planter row unit or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

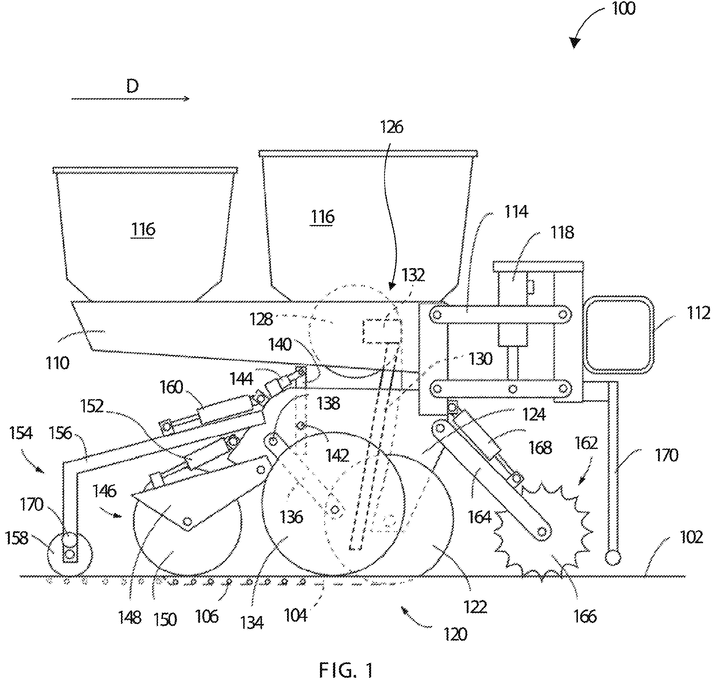

FIG. 1 illustrates an embodiment of an agricultural planter row unit 100. The row unit 100 has a frame 110 pivotally connected to a toolbar 112 by a parallel linkage 114, enabling each row unit 100 to move vertically independently of the toolbar 112 and of other row units 100. The frame 110 operably supports one or more hoppers 108, a downforce control system 118, a seed-trench opening assembly 120, a seed-delivery device 126, a seed-trench closing assembly 146, a packer wheel assembly 154, and a row cleaner assembly 162. The row unit 100 shown in FIG. 1 may be used with a conventional planter or with a central fill planter, in which latter case the hoppers 116 may be replaced with one or more mini-hoppers and the frame 110 modified accordingly as would be recognized by those of skill in the art.

The downforce control system 118 is disposed to apply lift and/or downforce on the row unit 100, such as disclosed in U.S. Patent 9,408,337, "Agricultural Row Unit Apparatus, Systems and Methods," granted August 9, 2016.

The seed-trench opening assembly 120 includes a pair of opening discs 122 rotatably supported by a downwardly extending shank 124 of the frame 110. The opening discs 122 are arranged to diverge outwardly and rearwardly so as to open a V-shaped seed trench 104 in the soil 102 as the planter traverses the field in a forward direction D.

The seed-delivery device 126 includes a seed meter 128 and a seed tube 130 that together may deliver seeds at a preselected rate to the soil 102. The seed meter 128 may be any commercially available seed meter, such as the fingertype meter or vacuum seed meter, such as the VSet^{®} meter, available from Precision Planting LLC, 23333 Townline Rd, Tremont, Ill. 61568. The seed meter 128 may be configured to orient seeds in a preselected orientation to the seed tube 130 by any selected method, such as that shown and described in U.S. Patent Application Publication 2019/0230846, "Systems, Implements, and Methods for Seed Orientation with Adjustable Singulators During Planting," published August 1, 2019.

The seed tube 130 is positioned between the opening discs 122 to deliver seed from the seed meter 128 into the opened seed trench 104. The depth of the seed trench 104 is controlled by a pair of gauge wheels 134 positioned adjacent to the opening discs 122. The gauge wheels 134 are rotatably supported by gauge wheel arms 136, which are pivotally secured at one end to the frame 110 about pivot pin 138. A rocker arm 140 is pivotally supported on the frame 110 by a pivot pin 142. Rotation of the rocker arm 140 about the pivot pin 142 sets the depth of the seed trench 104 by limiting the upward travel of the gauge wheel arms 136 (and thus the gauge wheels 134) relative to the opening discs 122. The rocker arm 140 may be adjustably positioned via a linear actuator 144 mounted to the row unit frame 110 and pivotally coupled to an upper end of the rocker arm 140. The linear actuator 144 may be controlled remotely or automatically actuated as disclosed, for example, in U.S. Patent 9,864,094, "System for Soil Moisture Monitoring," granted January 9, 2018.

A downforce sensor may be configured to generate a signal related to the amount of force imposed by the gauge wheels 134 on the soil 102. In some embodiments, the pivot pin 142 for the rocker arm 140 may comprise the downforce sensor, such as the instrumented pins disclosed in U.S. Patent 8,561,472, "Load Sensing Pin," granted October 22, 2013.

The seed-trench closing assembly 146 includes a closing wheel arm 148 that pivotally attaches to the row unit frame 110. A pair of offset closing wheels 150 are rotatably attached to the closing wheel arm 148 and are angularly disposed to "close" the seed trench 104 by pushing the walls of the open seed trench back together over the deposited seed 106. An actuator 152 may be pivotally attached at one end to the closing wheel arm 148 and at its other end to the row unit frame 110 to vary the down pressure exerted by the closing wheels 150 depending on soil conditions. The seed-trench closing assembly 146 may be of the type disclosed in U.S. Patent 9,848,524, "Agricultural Seed Trench Closing Systems, Methods, and Apparatus," granted December 26, 2017.

The packer wheel assembly 154 includes an arm 156 pivotally attached to the row unit frame 110 and extends rearward of the seed-trench closing assembly 146 and in alignment therewith. The arm 156 rotatably supports a packer wheel 158. An actuator 160 is pivotally attached at one end to the arm 156 and at its other end to the row unit frame 110 to vary the amount of downforce exerted by the packer wheel 158 to pack the soil over the seed trench 104.

The row cleaner assembly 162 may be the CleanSweep^{®} system available from Precision Planting LLC, 23333 Townline Rd, Tremont, Ill. 61568. The row cleaner assembly 162 includes an arm 164 pivotally attached to the forward end of the row unit frame 110 and aligned with the seed-trench opening assembly 120. A pair of row cleaner wheels 166 are rotatably attached to the forward end of the arm 164. An actuator 168 is pivotally attached at one end to the arm 164 and at its other end to the row unit frame 110 to adjust the downforce on the arm to vary the aggressiveness of the action of the row cleaner wheels 166 depending on the amount of crop residue and soil conditions.

The row unit 100 may optionally carry other sensors 170 to detect soil conditions before and/or after planting.

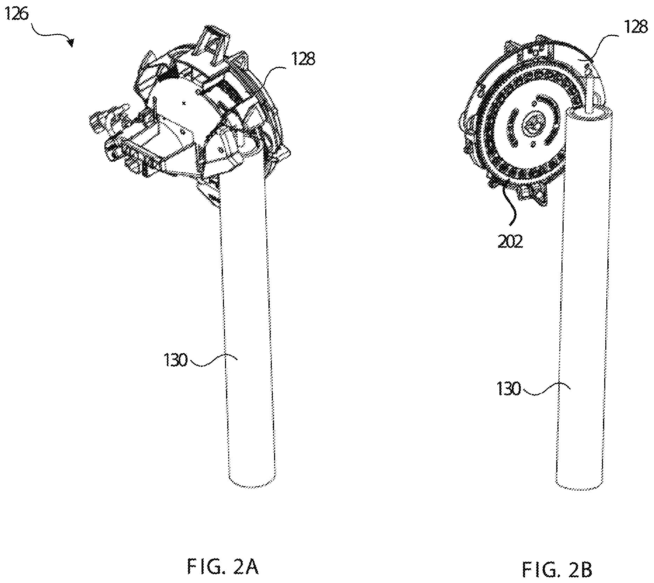

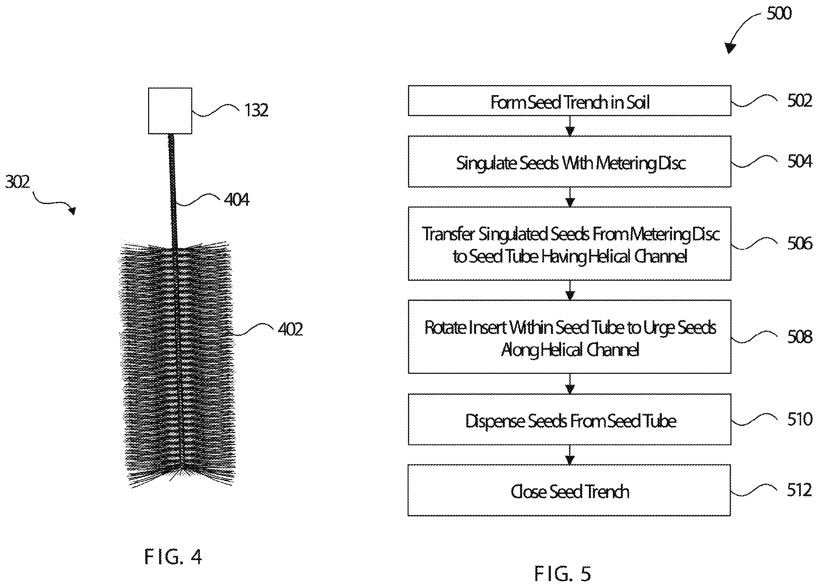

FIG. 2A is a simplified perspective view of the seed meter 128 and the seed tube 130 of the seed-delivery device 126. FIG. 2B illustrates the seed meter 128 and seed tube 130 with a cover of the seed meter 128 removed. A metering disc 202 rotates within the seed meter 128 and receives seed from the hopper 116 (FIG. 1). The metering disc 202 singulates and delivers seeds (i.e., one seed at a time) to the seed tube 130. In some embodiments, the seed meter 128 may be configured to orient seeds before or as they are delivered to the seed tube 130. For example, the seed meter 128 may include a vision system and a singulator with features (e.g., lobes) configured to orient seeds, such as shown in FIGS. 4A-4C of U.S. Patent Application Publication 2019/0230846, "Systems, Implements, and Methods for Seed Orientation with Adjustable Singulators During Planting," published August 1, 2019.

In some embodiments, the seed tube 130 may be generally cylindrical with a generally cylindrical interior. In other embodiments, the seed tube 130 may have another shape, such as tapered to a smaller diameter at the bottom (seed exit) of the seed tube 130.

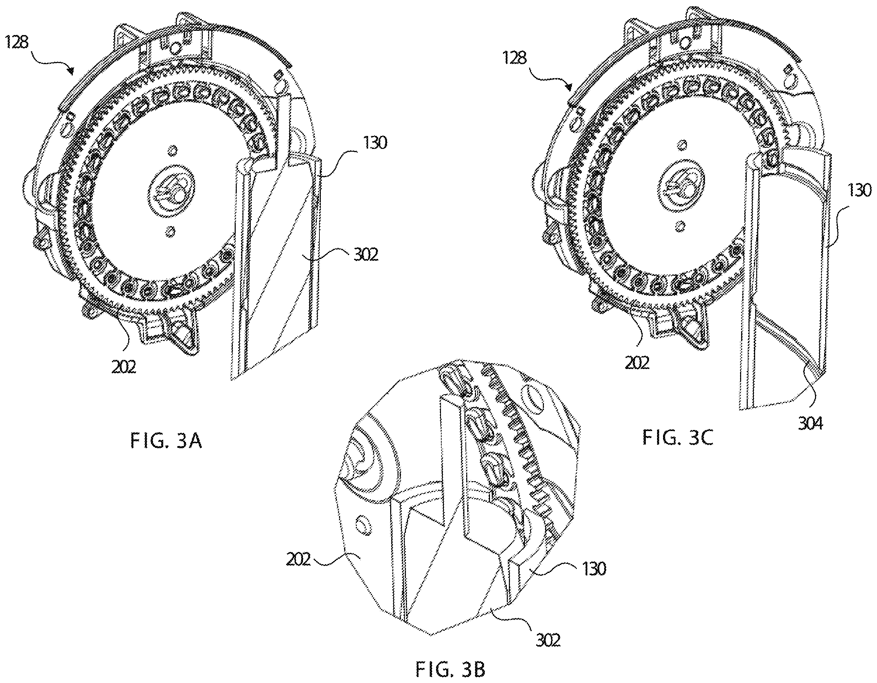

FIG. 3A shows an enlarged view of the metering disc 202 and a cross-section of the top portion of the seed tube 130. FIG. 3B shows the metering disc 202 and seed tube 130 in still more detail and from a different angle. The metering disc 202 has a plurality of holes spaced about a perimeter and configured to each receive a single seed. As known in the art, the size and spacing of the holes may vary based on the type of seed to be planted. As the metering disc 202 rotates, it carries seeds from the hopper 116 (FIG. 1) to the seed tube 130. An insert 302 within the seed tube 130 may keep the seeds in place as the seeds travel down the seed tube 130.

FIG. 3C shows the metering disc 202 and the cross-section of the top portion of the seed tube 130 as in FIG. 3A, but with the insert 302 removed from view. As shown, a helical channel 304 is formed in an inside wall of the seed tube 130. The helical channel 304 is aligned with the holes of the metering disc 202 such that the metering disc 202 delivers seeds to the helical channel 304 as the metering disc 202 rotates.

A drive mechanism 132 (FIG. 1) is configured to rotate the insert 302 within the seed tube 130. The drive mechanism 132 may be, for example a variable-speed electric motor, which may be controlled independently of the metering disc 202. In other embodiments, the drive mechanism 132 may include one or more gears coupled to a drive mechanism that controls rotation of the metering disc 202 in the seed meter 128.

As depicted in FIG. 3A and FIG. 3B, the insert 302 may be a generally cylindrical body, and may include foam, rubber, an elastomer, or another material. In other embodiments, and as depicted in FIG. 4, the insert 302 may be a brush having a plurality of resilient bristles 402 extending radially from a center support 404. In yet other embodiments, the insert 302 may include one or more flaps secured to a rotating shaft. The flaps may be hingedly connected to the shaft, or may simply flex within the seed tube 130 based on the flexibility of the material of the flap. Hinged flaps are described in U.S. Patent 9,591,798, "Distributing Unit for Granular Material, in Particular a Seeding Unit," granted March 14, 2017, and shown in FIGS. 12 and 19 thereof. The material at the outer diameter of the insert 302 (e.g., the ends of the bristles 402 or exterior of a cylinder body) may typically be flexible to enable the insert 302 to engage the seeds in the helical channel 304 without damaging the seeds. The insert 302 may be shaped to substantially fill the interior of the seed tube 130, other than the portion defined by the helical channel 304.

As the seeds travel down the helical channel 304, the insert 302 may provide an outward force on the seeds to help keep them in the helical channel 304. The seeds may orient themselves while traveling in the helical channel 304, such that the bottom of the seed tube 130, the orientation of each seed is approximately the same for each seed. If the seeds leave the bottom of the seed tube 130 in a preselected orientation, the seeds may each be planted in approximately the same orientation as well. Uniformity of seed orientation can improve the uniformity of crop emergence, uniformity of crop growth, and improved yield.

FIG. 5 is a simplified flow chart illustrating a method 500 of planting using a row unit as described above. Block 502 represents forming a seed trench in soil with the row unit. The seed trench may be formed with one or more opening discs carried by the row unit.

In block 504, seeds from a hopper are singluated with a metering disc. The singluated seeds are transferred to a seed tube having a helical channel in block 506. An insert within the seed tube rotates to urge the seeds along the helical channel toward the soil in block 508.

The seeds are dispensed from the seed tube in block 510 and the seed trench is closed in block 512. The seeds may be dispensed from the seed tube with a preselected orientation. For example, the seeds may be dispensed as described in U.S. Patent Application Publication 2020/0367425, "Seed Orientation System for Agricultural Planters," published November 26, 2020; U.S. Provisional Patent Application 63/262,411, "Row Unit Comprising a Covering Device and Methods of Planting Seeds," filed October 12, 2021; or U.S. Provisional Patent Application 63/262,417, "Wedge," filed October 12, 2021.

Though depicted as a flow chart, the actions in FIG. 5 are typically performed concurrently by different parts of the row unit. That is, the portion of the row unit that forms the seed trench leads the seed tube, which leads the seed-trench closing assembly as the row unit operates to plant seeds. In some embodiments, some actions may be omitted, or may be performed by another device.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. A seed-delivery device (126), comprising:
a seed meter (128) having a metering disc (202) configured to receive seeds;
a seed tube (130) coupled to the seed meter and having a helical channel (304);
an insert (302) within the seed tube; and
a drive mechanism (132) configured to rotate the insert;
**characterized in that** the helical channel (304) is formed in an inside wall of the seed tube (130).

2. The seed-delivery device (126) of claim 1, wherein the seed tube (130) has a generally cylindrical interior.

3. The seed-delivery device (126) of claim 1 or 2, wherein the insert (302) comprises a brush.

4. The seed-delivery device (126) of claim 3, wherein the brush (302) comprises a plurality of resilient bristles (402) extending radially from a center support (404).

5. The seed-delivery device (126) of claim 1 or 2, wherein the insert (130) comprises a generally cylindrical body.

6. The seed-delivery device (126) of claim 5, wherein the generally cylindrical body (302) comprises a material selected from the group consisting of foam, rubber, and elastomers.

7. The seed-delivery device (126) of any one of claims 1 to 6, wherein the drive mechanism (132) comprises a variable-speed motor.

8. The seed-delivery device (126) of any one of claims 1 to 7, wherein the metering disc (202) is configured to provide the seeds to the seed tube (130) in a preselected orientation.

9. A row unit (100) for planting seeds, comprising:
a frame (110) configured to be coupled to a toolbar (112);
a seed-trench opening assembly (120) carried by the frame and configured to form a seed trench (104);
the seed-delivery device (126) of any one of claims 1 to 8 carried by the frame and configured to deliver seeds to the seed trench; and
a seed-trench closing assembly carried (146) by the frame and configured to close the seed trench over seeds in the seed trench.

10. A method of planting with a row unit (100), the method comprising:
forming a seed trench (104) in soil with the row unit;
singulating seeds with a metering disc (202) carried by the row unit;
transferring singulated seeds from the metering disc to a first end of a seed tube (130) having a helical channel;
rotating an insert (302) within the seed tube to urge the seeds along the helical channel to a second end of the seed tube;
dispensing seeds from the second end of the seed tube (130); and
closing the seed trench (104) with a seed-trench closing assembly (146);
**characterized in that** the helical channel (304) is formed in an inside wall of the seed tube (130).

11. The method of claim 10, wherein dispensing seeds from the second end of the seed tube (130) comprises dispensing the seeds with a preselected orientation.

## Patentansprüche

1. Saatgutabgabevorrichtung (126) mit:
einem Saatgutdosierer (128) mit einer Dosierscheibe (202), die ausgebildet ist, um Samenkörner aufzunehmen;
einem Saatgutrohr (130), das mit dem Saatgutdosierer gekoppelt ist und einen spiralförmigen Kanal (304) aufweist;
einem Einsatz (302) in dem Saatgutrohr; und
einem Antriebsmechanismus (132), der ausgebildet ist, um den Einsatz zu drehen;
**dadurch gekennzeichnet, dass** der spiralförmige Kanal (304) in einer Innenwand des Saatgutrohrs (130) ausgebildet ist.

2. Saatgutabgabevorrichtung (126) nach Anspruch 1, **wobei** das Saatgutrohr (130) einen im Allgemeinen zylindrischen Innenbereich aufweist.

3. Saatgutabgabevorrichtung (126) nach Anspruch 1 oder 2, **wobei** der Einsatz (302) eine Bürste aufweist.

4. Saatgutabgabevorrichtung (126) nach Anspruch 3, **wobei** die Bürste (302) eine Mehrzahl von elastischen Borsten (402) aufweist, die sich radial ausgehend von einem zentralen Halter (404) erstrecken.

5. Saatgutabgabevorrichtung (126) nach Anspruch 1 oder 2, **wobei** der Einsatz (130) einen im Allgemeinen zylindrischen Körper aufweist.

6. Saatgutabgabevorrichtung (126) nach Anspruch 5, **wobei** der im Allgemeinen zylindrische Körper (302) ein aus Schaum, Gummi oder Elastomer ausgewähltes Material aufweist.

7. Saatgutabgabevorrichtung (126) nach einem der Ansprüche 1 bis 6, **wobei** der Antriebsmechanismus (132) einen drehzahlvariablen Motor aufweist.

8. Saatgutabgabevorrichtung (126) nach einem der Ansprüche 1 bis 7, **wobei** die Dosierscheibe (202) ausgebildet ist, um die Samenkörner dem Saatgutrohr (130) in einer vorgewählten Orientierung bereitzustellen.

9. Reiheneinheit (100) zum Säen von Samenkörnern, mit:
einem Rahmen (110), der ausgebildet ist, um mit einem Geräteträger (112) verbunden zu werden;
einer Saatgutfurchen-Öffnungsanordnung (120), die von dem Rahmen getragen wird und ausgebildet ist, um eine Saatgutfurche (104) zu formen;
der Saatgutabgabevorrichtung (126) nach einem der Ansprüche 1 bis 8, die von dem Rahmen getragen wird und ausgebildet ist, um der Saatgutfurche Samenkörner zuzuführen; und
einer Saatgutfurchen-Verschließanordnung (146), die von dem Rahmen getragen wird und ausgebildet ist, um die Saatgutfurche über Samenkörnern in der Saatgutfurche zu verschließen.

10. Verfahren zum Säen mit einer Reiheneinheit (100), wobei das Verfahren aufweist:
Formen einer Saatgutfurche (104) im Boden mit der Reiheneinheit;
Vereinzeln von Samenkörnern mit einer Dosierscheibe (202), die von der Reiheneinheit getragen wird;
Überführen vereinzelter Samenkörner von der Dosierscheibe zu einem ersten Ende eines einen spiralförmigen Kanal aufweisenden Saatgutrohrs (130);
Drehen eines Einsatzes (302) in dem Saatgutrohr, um die Samenkörner den spiralförmigen Kanal entlang zu einem zweiten Ende des Saatgutrohrs zu drängen;
Ausgeben von Samenkörnern aus dem zweiten Ende des Saatgutrohrs (130); und
Verschließen der Saatgutfurche (104) mit einer Saatgutfurchen-Verschließanordnung (146);
**dadurch gekennzeichnet, dass** der spiralförmige Kanal (304) in einer Innenwand des Saatgutrohrs (130) ausgebildet ist.

11. Verfahren nach Anspruch 10, **wobei** das Ausgeben von Samenkörnern aus dem zweiten Ende des Saatgutrohrs (130) ein Ausgeben der Samenkörner mit einer vorgewählten Orientierung aufweist.

## Revendications

1. Dispositif de distribution de graine (126), comprenant :
un distributeur de graine (128) comportant un disque de distribution (202) configuré de manière à recevoir des graines ;
un tube de graine (130) couplé au distributeur de graine et comportant un canal hélicoïdal (304) ;
un insert (302) à l'intérieur du tube de graine ; et
un mécanisme d'entraînement (132) configuré de manière à faire tourner l'insert ;
**caractérisé en ce que** le canal hélicoïdal (304) est formé sur une paroi interne du tube de graine (130).

2. Dispositif de distribution de graine (126) selon la revendication 1, dans lequel le tube de graine (130) comporte une partie intérieure sensiblement cylindrique.

3. Dispositif de distribution de graine (126) selon la revendication 1 ou 2, dans lequel l'insert (302) comprend une brosse.

4. Dispositif de distribution de graine (126) selon la revendication 3, dans lequel la brosse (302) comprend une pluralité de poils élastiques (402) s'étendant radialement à partir d'un support central (404).

5. Dispositif de distribution de graine (126) selon la revendication 1 ou 2, dans lequel l'insert (130) comprend un corps sensiblement cylindrique.

6. Dispositif de distribution de graine (126) selon la revendication 5, dans lequel le corps sensiblement cylindrique (302) comprend un matériau sélectionné à partir du groupe constitué par de la mousse, du caoutchouc et des élastomères.

7. Dispositif de distribution de graine (126) selon l'une quelconque des revendications 1 à 6, dans lequel le mécanisme d'entraînement (132) comprend un moteur à vitesse variable.

8. Dispositif de distribution de graine (126) selon l'une quelconque des revendications 1 à 7, dans lequel le disque de distribution (202) est configuré de manière à délivrer les graines au tube de graine (130) suivant une orientation pré-sélectionnée.

9. Unité de formation de rangée (100) destinée à planter des graines, comprenant :
un châssis (110) configuré de manière à être couplé à une barre d'outillage (112) ;
un ensemble d'ouverture de tranchée de graine (120) supporté par le châssis et configuré de manière à former une tranchée de graine (104) ;
le dispositif de distribution de graine (126) selon l'une quelconque des revendications 1 à 8 supporté par le châssis et configuré de manière à délivrer des graines à la tranchée de graine ; et
un ensemble de fermeture de tranchée de graine (146) supporté par le châssis et configuré de manière à refermer la tranchée de graine sur les graines dans la tranchée de graine.

10. Procédé de plantation avec une unité de formation de rangée (100), le procédé comprenant :
la formation d'une tranchée de graine (104) dans le sol avec l'unité de formation de rangée ;
la séparation des graines avec un disque de distribution (202) supporté par l'unité de formation de rangée ;
le transfert des graines séparées à partir du disque de distribution vers une première extrémité d'un tube de graine (130) comportant un canal hélicoïdal ;
la mise en rotation d'un insert (302) à l'intérieur du tube de graine afin de pousser les graines le long du canal hélicoïdal vers une seconde extrémité du tube de graine ;
la distribution de graines à partir de la seconde extrémité du tube de graine (130) ; et
la fermeture de la tranchée de graine (104) avec un ensemble de fermeture de tranchée de graine (146) ;
**caractérisé en ce que** le canal hélicoïdal (304) est formé sur une paroi interne du tube de graine (130).

11. Procédé selon la revendication 10, dans lequel la distribution des graines à partir de la seconde extrémité du tube de graine (130) comprend la distribution des graines suivant une orientation pré-sélectionnée.
